# EUROPEAN PATENT SPECIFICATION

(11) **EP 0 324 601 B1**
(45) Date of publication and mention of the grant of the patent: **23.03.1994**
(21) Application number: 89300221.2
(22) Date of filing: 11.01.1989
(51) Int. Cl.: D04H 1/54

(54) **Processes for preparing electret filters**
Verfahren zur Herstellung von Elektretfiltern
Procédé de préparation de filtres électrets

(30) Priority: 12.01.1988 JP 4464/88; 28.01.1988 JP 17969/88
(43) Date of publication of application: 19.07.1989
(73) Proprietor: MITSUI PETROCHEMICAL INDUSTRIES, LTD., Tokyo 100 (JP)
(72) Inventor: Matsuura, Satoshi Mitsui Petrochemical Ind., Ltd., Kuga-gun Yamaguchi (JP); Mito, Masayuki Mitsui Petrochemical Ind., Ltd., Kuga-gun Yamaguchi (JP); Shinagawa, Yoshio Mitsui Petrochemical Ind., Ltd., Kuga-gun Yamaguchi (JP)
(74) Representative: Myerscough, Philip Boyd

(56) References cited:
- EP-A- 0 038 743
- DE-A- 2 614 160

## Description

This invention relates to reinforced electret filters which have easy handling and have improved mechanical strength and self-supporting properties, and to a process for the preparation thereof.

Filters for filtering gases provided in a clean room for use in the manufacture of integrated circuits or in a cooled air circulating duct in a driving apparatus for floppy discs are required to catch fine dust that cannot be caught by commercially available common filters. Filters for filtering gases under present conditions are required to catch dust particles having a diameter of larger than 0.3 µm. With the progress of high densification of integrated circuits, there is a strong and growing demand for high-performance filters capable of catching dust finer than that mentioned above.

As fully demonstrated in, for example, JP-A-225416/1985, electrically charged synthetic fiber nonwoven fabrics have been widely used as filters for catching the finer dust mentioned above.

Requirements for electret filters are that the filters maintain stably and continuously their state of being highly densified with electrical charge over an extended period of time and, at the same time, that the filters do not make dust themselves, that is, they do not have a self-dusting property.

Electrically charged synthetic fiber nonwoven fabrics have been subjected to needle punch treatment in order to prevent the nonwoven fabrics constituting electret filters from falling into pieces. When the electrically charged synthetic fiber fabrics are subjected to needle punch treatment, however, parts of the fibers of the nonwoven fabrics are cut in some cases, resulting in a serious problem in that the cut fibers are the determining cause of self-dusting.

The surface of the needle punch treated electret filters is fluffy, and this is considered to be one of the causes of the self-dusting properties. Furthermore the needle punch treated filters have a problem in that there is difficulty when the filters are subjected to pleating (gathering), because they cannot be made thin and have poor toughness.

It is thought to be possible to integrate electrically charged synthetic fiber nonwoven fabrics into a solid structure by ultrasonic bonding, but it has been found that difficulty is involved in pleating the ultrasonic bonded electret filters, because the filters cannot be made thin and have poor toughness.

In order to solve the problems mentioned above, it is thought to be possible to integrate the nonwoven fabrics constituting the electret filter into a solid structure by subjecting the electrically charged synthetic fiber nonwoven fabrics to heat bonding, but it was considered that when the electrically charged synthetic fiber nonwoven fabrics are heat bonded, the electrical charge once imparted to the synthetic fiber nonwoven fabrics would markedly decrease at the time of heating.

Accordingly, there has been earnestly desired a process wherein electrically charged synthetic fiber nonwoven fabrics can be integrated into a strong solid structure and used as filters without largely decreasing the electrical charge imparted to said nonwoven fabrics.

Electret filters comprising electrically charged synthetic fiber nonwoven fabrics integrated into a solid structure are used as filters for air conditioners, because the filters have a fairly acceptable strength for their small thickness and a good performance of catching a dust.

However, such electret filters sometimes break or spread at the time of fabrication, because the filters have insufficient mechanical strength.

Because of the lack of self-supporting properties, the above-mentioned electret filters were sometimes found to be difficult to handle, particularly when stacked.

To obviate such difficulties there have heretofore been proposed and known reinforced electret filters prepared by ultrasonic bonding the four sides of the filter to a net made of polyethylene terephthalate as a packing material. However, this ultrasonic bonding is difficult to perform and, moreover, there were problems in that the reinforced electret filters have poor self-supporting properties and are difficult to handle, because only four sides of the electret filters are bonded to the polyethylene terephthalate net as a packing material while the greater part of the nonwoven fabrics constituting the filter are not bonded to said net.

Electret filters which have easy handling by virtue of their improved mechanical strength and self-supporting properties, and a process for preparing the same, are desired.

The present invention seeks to provide reinforced type electret filters which have easy handling due to their improved mechanical strength and self-supporting properties, and a process for the preparation thereof.

The present invention provides a reinforced electret filter which comprises a nonwoven fabric composed of an electrically charged synthetic fiber web and a reticular product made of a synthetic fiber, contacting portions between said nonwoven fabric and the fiber constituting said reticular product being thermowelded

The present invention also provides a process for preparing an electret filter which comprises feeding a nonwoven fabric composed of an electrically charged synthetic fiber web, at a temperature below the softening temperature of said synthetic fiber, together with a reticular product made of a synthetic fiber, between co-operating embossing and flat rolls, integrating said nonwoven fabric by partially thermowelding a surface thereof as it is nipped and passed under pressure between said rolls, and simultaneously integrating said integrated nonwoven fabric and said reticular product by thermowelding contacting portions of said integrated nonwoven fabric and the synthetic fiber constituting said reticular product.

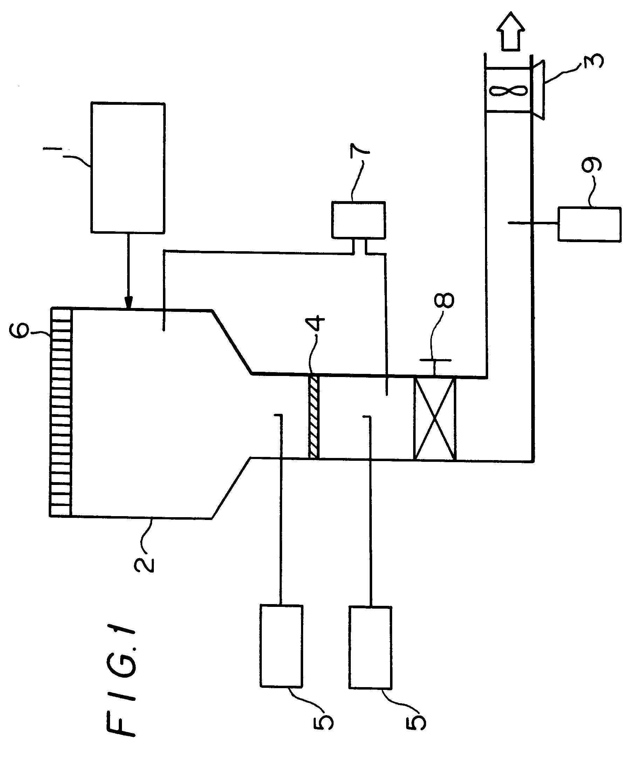

Fig. 1 shows an apparatus for evaluating the filtering performance of filters.
- 1 ...: Aerosol generator
- 2 ...: Chamber
- 3 ...: Blower
- 4 ...: Electret filter
- 5 ...: Particle counter
- 6 ...: Clean air filter
- 7 ...: Pressure gauge
- 8 ...: Air flow control valve
- 9 ...: Air flow meter

The electrically charged synthetic fiber web used as a raw fabric may be a nonwoven fabric composed of electrically charged synthetic fiber webs which have been widely used hitherto in the preparation of electret filters. The nonwoven fabrics composed of synthetic fiber webs may be electrically charged by any treatment known, per se.

The nonwoven fabric composed of electrically charged synthetic fiber webs preferably has a weight of 10-150 g/m², more preferably 70-130 g/m².

The nonwoven fabrics composed of electrically charged synthetic fiber webs desirably have a surface charge density of 10-40 x 10⁻⁹ coulomb/cm², preferably 25-35 x 10⁻⁹ coulomb/cm².

Usable as the electrically charged synthetic fiber webs mentioned above are, for example, those disclosed in JP-A-225416/1985.

The reinforced electret filter of the present invention is composed of a nonwoven fabric composed of an electrically charged synthetic fiber web and a reticular product made of a synthetic fiber, and integrated into a solid structure by thermowelding almost all the contacting portions of the nonwoven fabric and the synthetic fiber constituting said reticular product. Further, the nonwoven fabric itself is also integrated by partially fusion bonding the surface thereof.

The reticular product made of a synthetic fiber includes those made of polypropylene type fibers or polyethylene type fibers. Particularly preferred is a reticular product made of polypropylene type fiber. The synthetic fibers used in the present invention are usually 0.1-10 deniers.

The reticular product desirably has a weight of 30-100 g/m², preferably 50-80 g/m². In the present invention, the shape of the reticular product is not particularly limited, but the size of network is preferably represented by a diagonal line of 3-10 mm, and the size of the synthetic fiber constituting the reticular product is preferably about 10-1000 deniers.

In the present invention, a reticular product in which level crossings of synthetic fibers constituting the net work are thermowelded are preferably used.

The reticular product made of a synthetic fiber and the nonwoven fabric composed of an electrically charged synthetic fiber web are fed between rolls at a temperature below the softening temperature of said synthetic fiber constituting said web, and more particularly at a temperature lower by 5-50°C, even more particularly at a temperature lower by 5-30°C, more preferably 20-30°C, than the softening temperature of said synthetic fiber.

The electrical charge imparted to the web is sometimes lost when the temperature used is higher than the softening temperature of said synthetic fiber, though said nonwoven fabric is integrated assuredly into a solid structure. When the temperature used is lower by more than 50°C than the softening temperature of the synthetic fiber constituting the nonwoven fabric, on the other hand, said nonwoven fabric is sometimes not integrated sufficiently into a solid structure.

The softening temperature of an electrically charged synthetic fiber web composed of polypropylene as a base mixed with polycarbonate and maleic acid-modified polypropylene is about 150°C. A temperature of about 120-140°C may, for example, be used in the process of the present invention.

When the nonwoven fabric is fusion bonded at a temperature below the softening temperature of the synthetic fiber constituting the web, only the embossed surfaces of said nonwoven fabric are fused, and the imparted electrical charge remains without practical loss in the non-embossed portions and interlayer of said nonwoven fabric. Thus no electrical charge practically disappears from the web. Accordingly, a filter having an excellent dust-catching performance is obtained.

The reticular product made of a synthetic fiber and the nonwoven fabric composed of the electrically charged synthetic fiber web are fed between co-operating embossing and flat rolls and are nipped by said rolls under pressure, whereupon said nonwoven fabric is softened and thermowelded even at a temperature below the aforesaid softening temperature and, at the same time, almost all the contacting portions of said nonwoven fabric and the synthetic fiber constituting said reticular product are thermowelded and said nonwoven fabric and said reticular product are integrated into a solid structure.

When the nonwoven fabric composed of the synthetic fiber web and the synthetic fiber of the reticular product are thermowelded in the manner mentioned above, only the surfaces of the embossed portions of the resulting filter are fused, and the electrical charge imparted to said filter remains without practical loss in the non-embossed portions and interlayer of the filter and the electrical charge does not practically disappear from the web. Accordingly, a filter having an excellent dust-catching performance is obtained.

The synthetic fiber of the surface portion of the web fused at the time of embossing more or less permeates into the non-fused portions of the web, the integration of the web into a solid structure is carried out assuredly and, at the same time, self-dusting of the resulting filter is inhibited.

The nonwoven fabric integrated with the above-mentioned reticular product into a solid structure is usually taken up at a take-up speed of 1-20 m/min.

The electret filter thus prepared has a solid structure wherein the reticular product made of a synthetic fiber is push-fitted by thermowelding into the nonwoven fabric composed of a synthetic fiber web.

Such reinforced electret filters are capable of being formed into a thin film-like or sheet-like shape and, moreover, have excellent mechanical strength and self-supporting properties by virtue of the solid structure thereof. Therefore, the filters do not have problems such as breakage or stretching at the time of any subsequent fabrication process and are easy to handle. By virtue of the above-mentioned structure, the reinforced electret filters have excellent toughness, and hence are readily adaptable for bending fabrication, i.e. pleating. Furthermore, the reinforced electret filters have an advantage such that when they are in use no sound of air passing therethrough is heard, because the nonwoven fabric and the reticular product are thermowelded to integrate them throughout.

The reinforced electret filters have excellent dust-catching performance, because the electrical charge imparted thereto remains without practical loss at the time of the integrating fabrication thereof.

In the process for preparing the reinforced electret filters of the present invention, the nonwoven fabric and the reticular product are integrated into a solid structure by a thermowelding technique. This processing operation is very simple compared with the conventional ultrasonic welding technique.

The reinforced electret filters of the present invention may be used as filters, for example, a clean room, a home use air cleaner, or filtering gases in a floppy disc driving apparatus.

The present invention is further illustrated in the following Examples. The tests carried out in the Examples were as follows:

### Measurement methods

### 〈Filtering efficiency〉

The apparatus used in this test is shown in Fig. 1. NaCl particles (particle diameter 0.3 µm) were fed to a chamber 2 by means of clean air from an aerosol generator 1 manufactured and sold by Nippon Kagaku Kogyo K.K. After the particle concentration reached a given concentration (2-6 x 10⁶ piece/CF), a blower 3 was operated, and when a given velocity (τ = 10 cm/s) of the clean air containing NaCl particles was attained, NaCl particle concentrations at the sides of the upper stream and lower stream, respectively, relative to an electret filter 4 were measured with a particle counter-KC-01A 5 to calculate the filtering efficiency E according to the following equation:

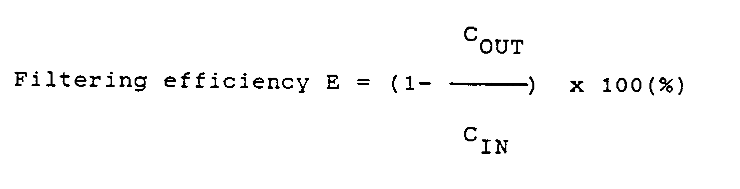

### 〈Pressure loss〉

In the above-mentioned apparatus, the pressure loss before and after the filter at τ = 1.2 m/s was measured with a digital pressure gauge manufactured and sold by Tokyo Kokukeiki K.K.

### 〈Weight〉

The measurement was conducted according to JIS-L1085.

### Example 1

A nonwoven fabric composed of an electrically charged synthetic fiber web was fed, together with Netron (a product of Mitsui Petrochemical Industrial Materials Co., Ltd., weight : 65 g/m², mesh size : 5 mm x 4 mm), between co-operating embossing and flat rolls to obtain a reinforced type electret filter comprising the electrically charged synthetic fiber nonwoven fabric integrated with Netron.

The reinforced electret filter thus obtained was evaluated for performance. It was found that the filter was tough and had good self-supporting properties and favorable fabrication quality.

### Referential Example 1

The electrically charged synthetic fiber web used in Example 1 was evaluated for performance using the tests mentioned above.

The results obtained are shown in Table 1.

### Referential Example 2

A filter medium was prepared by heat sealing the four sides of a reticular product made of a polyester (a product of Toyobo Co. sold under the trade name "Rassermesh RE-20", weight: 60 g/m², size: 40 denier, mesh size: 1.5 mm x 2.0 mm) used in a commercially available air cleaning filter (RB-A201) for a Toshiba air conditioner to the four sides of a nonwoven fabric composed of an electrically charged synthetic fiber web.

The filter medium thus obtained was evaluated for performance in the same manner as in Example 1.

The results obtained are shown in Table 2.

### Referential Examples 3-4

Example 1 was repeated except that the embossing was carried out at a fusion bonding temperature of 155°C or 110°C.

The results obtained are shown in Table 2.

### Referential Example 5

Example 1 was repeated except that the nonwoven fabric composed of an electrically charged synthetic fiber web was integrated with Netron into a solid structure ultrasonic welding instead of a thermo-embossing roll.

The results obtained are shown in Table 1.

In the Table ○ indicates that the filter had a satisfactory performance, whereas X indicates that the filter did not have a satisfactory performance.

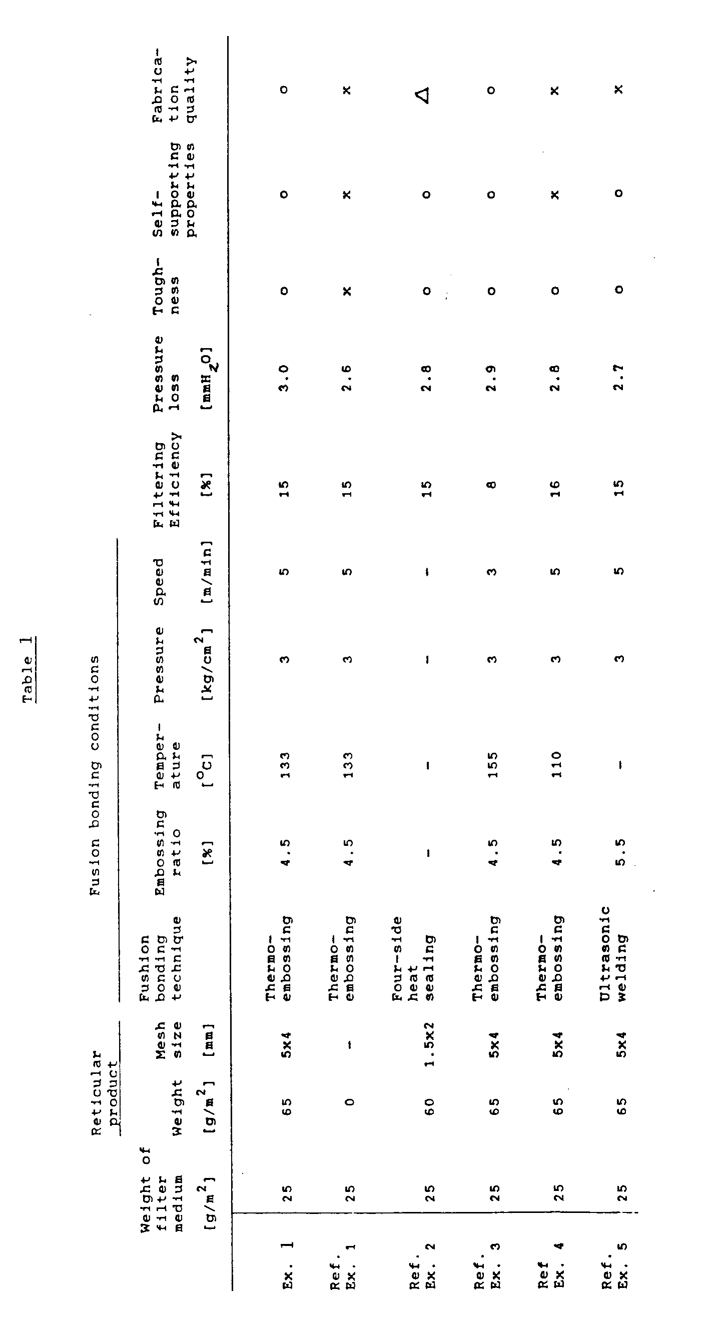

## Claims

1. A reinforced electret filter which comprises a nonwoven fabric composed of an electrically charged synthetic fiber web and a reticular product made of a synthetic fiber, contacting portions between said nonwoven fabric and the fiber constituting said reticular product being thermowelded.

2. A filter according to claim 1 wherein the nonwoven fabric has a surface electrical charge of 10-40 x 10⁻⁹ coulomb/cm².

3. A process for preparing an electret filter which comprises feeding a nonwoven fabric composed of an electrically charged synthetic fiber web, at a temperature below the softening temperature of said synthetic fiber, together with a reticular product made of a synthetic fiber, between cooperating embossing and flat rolls, integrating said nonwoven fabric by partially thermowelding a surface thereof as it is nipped and passed under pressure between said rolls, and simultaneously integrating said integrated nonwoven fabric and said reticular product by thermowelding contacting portions of said integrated nonwoven fabric and the synthetic fiber constituting said reticular product.

4. A process according to claim 3 wherein the nonwoven fabric has a surface electrical charge of 10-40 x 10⁻⁹ coulomb/cm².

5. A process according to claim 3 or 4 wherein the temperature is 5-30°C below the softening temperature.

## Patentansprüche

1. Verstärktes Elektretfilter, das nicht-gewebtes Gewebe umfaßt, bestehend aus elektrisch geladenem synthetischem Fasergewebe und einem netzartigen Produkt, hergestellt aus synthetischer Faser, wobei in Kontakt stehende Teile zwischen dem nicht-gewebten Gewebe und der Faser, die das netzartige Produkt ausmacht, thermoverschweißt sind.

2. Filter nach Anspruch 1, worin das nicht-gewebte Gewebe eine elektrische Oberflächenladung von 10-40 x 10⁻⁹ Coulomb/cm² aufweist.

3. Verfahren zur Herstellung eines Elektretfilters, welches umfaßt die Zufuhr eines nicht-gewebten Gewebes, bestehend aus einem elektrisch geladenen Fasergewebe, bei einer Temperatur unterhalb der Erweichungstemperatur der synthetischen Faser, zusammen mit einem netzartigen Produkt, das aus synthetischer Faser hergestellt ist, zwischen zusammenwirkenden Präge- und Flachbahnwalzen, wobei das nicht-gewebte Gewebe durch teilweises Thermoverschweißen einer Oberfläche davon integriert wird, während dieses erfaßt und unter Druck zwischen den Walzen hindurchgeführt wird, und wobei simultan das integrierte nicht-gewebte Gewebe und das netzartige Produkt durch Thermoverschweißen von in Kontakt stehenden Teilen des integrierten nicht-gewebten Gewebes und der synthetischen Faser, die das netzartige Produkt ausmacht, vereinigt werden.

4. Verfahren nach Anspruch 3, worin das nicht-gewebte Gewebe eine elektrische Oberflächenladung von 10-10 x 10⁻⁹ Coulomb/cm² aufweist.

5. Verfahren nach Anspruch 3 oder 4, worin die Temperatur 5-30°C unterhalb der Erweichungstemperatur liegt.

## Revendications

1. Electrofiltre renforcé qui comporte un tissu non-tissé constitué d'une bande en fibres synthétiques électriquement chargée et un filet en fibres synthétiques, les parties en contact dudit tissu non-tissé et des fils constituant ledit filet étant thermosoudées.

2. Filtre conforme à la revendication 1, dans lequel le tissu non-tissé présente une charge électrique surfacique de 10-40.10⁻⁹ C/cm².

3. Procédé de fabrication d'un électrofiltre, qui comporte le fait de faire passer, entre un rouleau à surface lisse et un rouleau à gaufrer conjugués, un tissu non-tissé constitué d'une bande en fibres synthétiques électriquement chargée, à une température inférieure à la température de ramollissement de ces fibres synthétiques, conjointement avec un filet en fibres synthétiques, le fait de consolider ledit tissu non-tissé par thermosoudure partielle d'une de ses surfaces lorsqu'il est pincé et comprimé en passant entre lesdits rouleaux, et de réunir en un tout, en même temps, ledit tissu non-tissé consolidé et ledit filet, par thermosoudure des parties en contact dudit tissu non-tissé consolidé et des fils de fibres synthétiques constituant ledit filet.

4. Procédé conforme à la revendication 3, dans lequel le tissu non-tissé présente une charge électrique surfacique de 10-40.10⁻⁹ C/cm².

5. Procédé conforme à la revendication 3 ou 4, dans lequel la température est inférieure de 5-30°C à ladite température de ramollissement.
